# FASCICULE DE BREVET EUROPEEN

(11) **EP 0 832 043 B1**
(45) Date de publication et mention de la délivrance du brevet: **12.05.2004**
(21) Numéro de dépôt: 97901118.6
(22) Date de dépôt: 17.01.1997
(51) Int. Cl.: C03B 9/453, C03B 7/16, C03B 35/24, C03B 35/26, C03B 35/04

(54) **PROCEDE ET DISPOSITIF POUR LA MANUTENTION DE BOUTEILLES**
VERFAHREN UND VORRICHTUNG ZUR BEHANDLUNG VON FLASCHEN
BOTTLE HANDLING METHOD AND DEVICE

(30) Priorité: 19.01.1996 FR 9600581
(43) Date de publication de la demande: 01.04.1998
(73) Titulaire: SAINT-GOBAIN EMBALLAGE, 92400 Courbevoie (FR)
(72) Inventeur: MEROUR, Philippe, F-71640 Dracy-le-Fort (FR)
(74) Mandataire: Le Cam, Stéphane Georges Elie
(86) Numéro de dépôt international: PCT/FR1997/000100
(87) Numéro de publication internationale: WO 1997/026220

(56) Documents cités:
- EP-A- 0 277 683
- GB-A- 2 292 551
- US-A- 3 340 038
- US-A- 3 857 691
- US-A- 3 893 835
- US-A- 4 927 444

## Description

L'invention concerne une technique pour la manutention de bouteilles avec une main de poussée. Plus particulièrement, l'invention vise des techniques de manipulation de bouteilles en cours d'élaboration et plus précisément de boutteilles présentant une température élevée (voir par exemple GB-A- 2 292 551).

Les mains de poussée sont des outils permettant de transférer les bouteilles, issues de leur moule de formage vers un convoyeur du type tapis roulant qui les évacue par exemple vers une arche de recuisson. Ces mains de poussée sont habituellement constituées de plusieurs compartiments dans lesquels se logent simultanément plusieurs bouteilles. Leur utilisation consiste, dès que les bouteilles sont libérées par les moules, à déplacer lesdites mains de poussée en direction des bouteilles pour pousser celles-ci vers le tapis convoyeur. Chaque bouteille se retrouve dans un logement de la main de poussée prévu à cet effet.

La main de poussée venant pousser les bouteilles, il existe toujours a priori un contact entre celle-ci et les bouteilles dont les risques sont généralement atténués par la présence de matériaux de contact tels que du carbone ou des résines spéciales, fixés sur les parois métalliques des mains de poussée. Ces contacts sont à éviter car les bouteilles, du fait de leur température à ce stade de production, peuvent être marquées, ce qui conduit à des défauts tels que rayures, glaçures. Ces défauts entraînent, soit une réduction de la résistance mécanique des articles, soit éventuellement leur mise au rebut.

Par ailleurs, le fait de déplacer les bouteilles par poussée, sans que celles-ci soient totalement calées par les parois des logements des mains de poussée, peut conduire à des mouvements incertains, voire une chute des bouteilles et donc leur casse, ou encore un enverrage de la machine de production.

Il a déjà été proposé de créer une aspiration par le vide pour venir plaquer les bouteilles sur les parois de la main de poussée durant leur transfert d'un endroit à un autre. Une telle technique permet en effet de bien maintenir une bouteille en position durant son transfert mais contribue à augmenter les risques de défauts dus aux contacts sur les parois des mains de poussée. En effet, les bouteilles ainsi plaquées présentent au moins une génératrice au contact d'une paroi de la main de poussée et généralement deux, dès lors que la bouteille est coincée dans un angle de la main de poussée. Une autre technique, notamment décrite dans le brevet US-A-4,927,444, consiste à souffler un jet d'air à partir d'un orifice placé sur la main de poussée sur une paroi en vis-à-vis de l'endroit où l'on veut maintenir en place une bouteille. Selon cette technique les bouteilles sont maintenues en place contre les parois de la main de poussée par la pression du jet d'air qui appuie les bouteilles contre les parois. Cette technique présente les mêmes inconvénients que la technique précédemment décrite puisqu'elle accentue les contacts entre les bouteilles et les parois, et donc les risques d'apparition de défauts.

EP-A2-0277683 décrit un procédé et un dispositif pour la manipulation de verre plat consistant à créer une dépression entre le verre plat et l'outil. Selon cette technique, le gaz est soufflé contre le verre plat.

L'invention a pour but un procédé de manutention de bouteilles assurant un positionnement précis de la bouteille durant la manutention en évitant au maximum les contacts avec des outils. Dans le cas d'une main de poussée, l'invention a ainsi pour but de caler une bouteille en verre en position dans une main de poussée en limitant les contacts entre les parois de la main de poussée et la bouteille.

Ce but est atteint selon l'invention par un procédé de manutention de bouteilles dans lequel une main de poussée véhicule la bouteille ou participe au transfert de la bouteille et selon lequel on souffle au moins un jet de gaz sous pression au travers d'un conduit traversant la main de poussée, et on maintient la bouteille en position contre la main de poussée en limitant les contacts avec celle-ci par l'intermédiaire dudit jet de gaz. Le procédé selon l'invention est plus particulièrement adapté à la manipulation de bouteilles en verre présentant une température élevée, c'est-à-dire une température pouvant notamment entraîner des défauts de la bouteille lors d'un contact avec un outil. En effet, le jet de gaz soufflé au travers du conduit qui, selon toute logique repousse la bouteille, peut créer une aspiration de celle-ci lorsque ladite bouteille se trouve séparée dudit orifice d'une distance donnée. Cette distance est bien entendu fonction de différents paramètres du jet liés notamment à la pression, au débit de gaz et lo aux dimensions de l'orifice du conduit et du diamètre de l'objet. Lorsque cette distance diminue encore, c'est-à-dire lorsque la bouteille se rapproche très près de l'orifice du conduit et donc de la paroi de la main de poussée, le jet de gaz agit de nouveau comme repousseur. Cette diminution de la distance se produit automatiquement, puisque d'une part, la main de poussée avance vers la bouteille et que d'autre part, la bouteille est aspirée vers la main de poussée.

Le procédé selon l'invention permet donc, par un phénomène d'aspiration, de maintenir la bouteille en position sur la main de poussée en évitant au maximum les contacts avec celle-ci, puisque le jet de gaz retrouve une fonction de repousseur lorsque la distance orifice - bouteille devient très faible. Dans le cas d'une main de poussée, des contacts entre celle-ci et la bouteille peuvent subsister, mais ceux-ci ne sont que ponctuels et peu fréquents contrairement aux techniques de l'art antérieur évoquées précédemment où des contacts permanents existent selon au moins une génératrice du fût d'une bouteille. Ces contacts ponctuels peuvent être dus à un léger vacillement de la bouteille, celle-ci ne pouvant être parfaitement stable lorsqu'elle est déplacée. Les résultats obtenus selon l'invention, c'est-à-dire le maintien en position d'une bouteille sans contact avec les parois, sont très bons lorsque la bouteille se présente directement en vis-à-vis de l'orifice du conduit. Il est apparu que les résultats sont tout aussi satisfaisants lorsque la bouteille ne se présente pas directement en vis-à-vis de l'orifice mais est légèrement décalée ou excentrée par rapport au dit orifice.

Toutefois, il peut s'avérer délicat de gérer à la fois le mouvement de l'outil et le jet de gaz , en effet, alors que la main de poussée s'approche des bouteilles pour entraîner celles-ci, le jet de gaz sous pression a tendance à repousser celles-ci tant que la distance critique n'est pas atteinte, c'est-à-dire la distance séparant l'orifice de la bouteille, à partir de laquelle ladite bouteille subit un phénomène d'aspiration.

Selon une première variante de l'invention, il est prévu de déclencher le soufflage de gaz lorsque la bouteille atteint ladite distance critique, c'est-à-dire lorsque par exemple la main de poussée est suffisamment rapprochée de la bouteille pour qu'il se produise un phénomène d'aspiration. Cette solution est satisfaisante mais peut conduire à une augmentation des coûts car elle s'accompagne, par exemple, de capteurs déterminant la position de la bouteille et reliés à des déclencheurs du soufflage de gaz. De plus, une même main de poussée peut véhiculer plusieurs bouteilles simultanément, lesdites bouteilles ayant des positions relatives vis-à-vis de la main de poussée qui peuvent être différentes d'une bouteille à l'autre. Il peut donc être nécessaire de concevoir un dispositif gérant des soufflages d'air indépendant les uns des autres pour chacune des bouteilles ; un tel dispositif est encore plus complexe et donc plus onéreux.

Selon une seconde variante de l'invention, il est prévu de souffler le jet d'air au travers d'un conduit disposé relativement à la paroi de la main de poussée sur laquelle il débouche de façon à créer un effet Coanda sur la paroi de la main de poussée. Selon cette seconde variante, le flux d'air soufflé par l'orifice du conduit longe la paroi de la main de poussée et n'est donc plus orienté en direction de la bouteille. Dans le cas d'une main de poussée, le soufflage d'air peut donc débuter avant que celle-ci ne s'approche de la bouteille sans risque que la bouteille soit repoussée. Il existe alors un phénomène d'aspiration quelle que soit la distance séparant la bouteille de l'orifice, ce phénomène devenant notable lorsque la bouteille devient proche de l'orifice. Toutefois, lorsque la distance séparant la bouteille de l'orifice du conduit diminue encore, le jet de gaz finit par repousser la bouteille de sorte que celle-ci est maintenue en position sans avoir pour autant de contact avec les parois de la main de poussée.

Le conduit est avantageusement réalisé de façon à ce que les flux de gaz s'écoule le long de-la paroi selon une direction semblable à la trajectoire relative suivie par la bouteille vis-à-vis de la main de poussée. Par exemple, si dans le cas d'une main de poussée il est souhaité de maintenir la bouteille dans un angle formé par deux parois de ladite main de poussée, le conduit sera réalisé de sorte que le flux de gaz parte en direction de cet angle. De cette façon, ce flux gazeux ne perturbe pas l'avancée de la bouteille. Par ailleurs, il est apparu dans certains cas que ce flux gazeux peut également avantageusement participer à l'entraînement de la bouteille et donc favoriser son déplacement.

Egalement, dans le but de ne pas perturber le déplacement de la bouteille vis-à-vis de la main de poussée et au contraire de favoriser voire d'orienter ce déplacement, il est avantageusement prévu de souffler au moins deux jets de gaz agissant simultanément ou successivement sur la même bouteille ou sur des bouteilles différentes.

L'invention propose également un dispositif pour la mise en oeuvre du procédé qui vient d'être décrit. Selon l'invention, ce dispositif pour la manutention de bouteilles comporte une main de poussée, pour véhiculer la bouteille ou participer à son transfert, au moins une paroi de la main de poussée étant percée d'au moins un conduit relié à une source de gaz sous pression et l'orifice dudit conduit étant placé tel que la distance le séparant de la bouteille diminue pendant au moins une première phase de la manutention. Le dispositif ainsi décrit permet donc en soufflant un jet d'air de créer un phénomène d'aspiration de la bouteille qui va donc commencer par se rapprocher de l'orifice du conduit.

Selon une forme préférée de l'invention, pour créer un effet Coanda sur la paroi de la main de poussée, la direction du conduit forme un angle avec la surface de la paroi qu'il traverse. Cet angle doit avoir une valeur minimale qui dépend de la pression du gaz et des caractéristiques géométriques de la paroi et du conduit.

Pour obtenir un effet Coanda, l'orifice du conduit a avantageusement la forme d'une fente ou bien est constitué d'un ensemble de trous, de préférence alignés.

Outre l'utilisation du procédé pour améliorer l'efficacité des mains de poussée, l'invention vise une application du procédé pour l'alignement de bouteilles sur un convoyeur. Pour une telle application, l'invention permet un bon positionnement des bouteilles avec peu ou pas de contact entre les bouteilles et la paroi de l'outil ou « aligneur » et, en outre, dans le cas où il y a création d'un effet Coanda, le flux gazeux contribue à l'avancée des bouteilles comme il a été expliqué précédemment.

D'autres détails et caractéristiques avantageux de l'invention ressortiront ci-après de la description d'exemples de réalisation de l'invention en référence aux figures qui représentent :
- Figure 1, un schéma d'un dispositif illustrant le principe de l'invention,
- Figure 2, un schéma d'une main de poussée,
- Figure 3, un schéma d'une partie d'une main de poussée selon l'invention,
- Figures 4, 5, des courbes illustrant les résultats obtenus avec le dispositif de la figure 3,
- Figure 6, une variante de la figure 3,
- Figure 7, les résultats obtenus selon cette variante,
- Figure 8, un schéma d'une partie d'une main de poussée selon une autre réalisation de l'invention,
- Figure 9, les résultats obtenus selon le schéma de la figure 8, dans le cas de la figure 10,
- Figure 10, une variante de la figure 8,
- Figure 11, une autre variante de la figure 8,
- Figure 12, les résultats obtenus selon la variante, de la figure 11,
- Figure 13, les résultats obtenus selon une autre variante de la figure 8,
- Figure 14, un schéma d'une variante de réalisation selon l'invention,
- **Figure 15,** un schéma d'une main de poussée selon l'invention,
- **Figures 16 et 17,** deux représentations schématisant le déplacement de la main de poussée selon la figure 15.

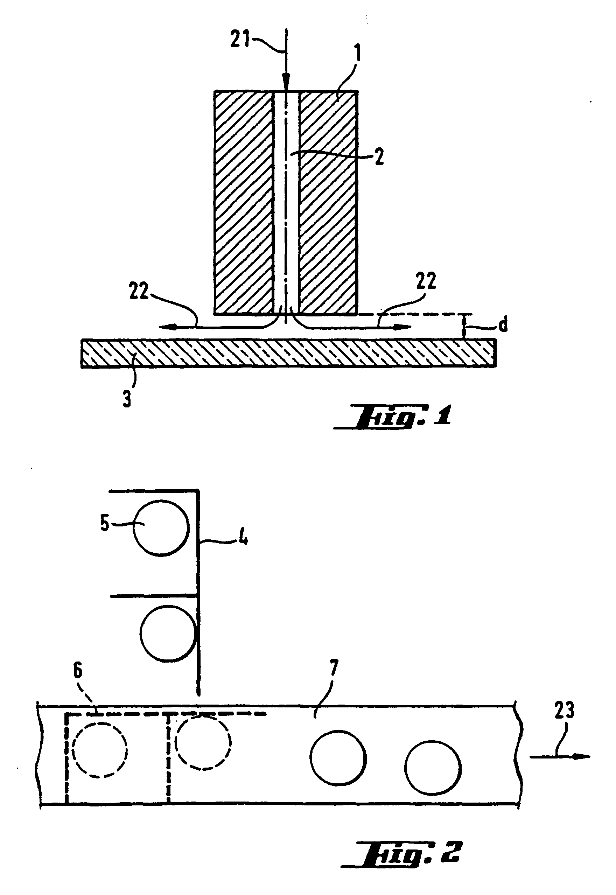

Sur la figure 1, on a représenté une vue de côté en élévation d'un schéma d'un dispositif permettant de mettre en évidence le phénomène décrit dans la demande. Ce dispositif simplifié se compose d'un cylindre 1 de diamètre 30 mm traversé par un canal 2 de section circulaire présentant un diamètre de 1 millimètre. Au travers de ce canal est soufflé un gaz sous pression tel que de l'air. La direction de soufflage est indiquée par les flèches 21, 22. Face à l'orifice par lequel le gaz est émis, se présente une plaque de verre 3. Lors d'essais, il est apparu qu'à partir d'une distance « d » d'environ 4 millimètres séparant l'orifice de la plaque de verre 3, ladite plaque 3 subit une force d'aspiration et tend à être entraînée en direction du cylindre 1. Pour une distance supérieure à celle qui vient d'être évoquée, le jet de gaz émis depuis l'orifice du cylindre 1 tend à repousser la plaque de verre 3. Cette position située à une distance d'environ 4 millimètres peut donc être assimilée à une position d'équilibre instable. Lorsque la distance entre l'orifice et la plaque de verre 3 est inférieure à 4 mm, ladite plaque 3 est donc aspirée vers le cylindre 1; toutefois, lorsque la distance entre l'orifice et la plaque 3 devient inférieure à environ 0,2 millimètre, la plaque 3 subit alors une force de répulsion. La position de la plaque 3 à une distance d'environ 0,2 millimètre de l'orifice peut alors être assimilée à une position d'équilibre stable. En effet, si les positions relatives du cylindre 1 et de la plaque 3 sont légèrement modifiées, la plaque 3 sera repositionnée en position d'équilibre stable soit sous l'effet d'une force d'aspiration, lorsque par exemple le cylindre 1 est légèrement écarté de la plaque 3, soit sous l'effet d'une force qui tend à éloigner ladite plaque 3, lorsque par exemple le cylindre 1 est légèrement rapproché de la plaque de verre 3.

Sur la figure 2, est représenté un schéma, vue de dessus, d'une main de poussée 4 telle qu'elle peut se présenter dans l'industrie verrière. De telles mains de poussée 4 sont notamment utilisées pour amener les bouteilles 5 qui viennent d'être fabriquées depuis la zone de moulage, dès leur démoulage, vers un tapis convoyeur 7 qui peut par exemple les conduire vers une arche de recuisson, selon la direction indiquée par la flèche 23.

Sur cette figure 2, est représenté le déplacement de la main de poussée 4 vers sa position 6 pour amener les bouteilles 5 sur le convoyeur 7.

Les figures qui suivent illustrent plus précisément l'invention adaptée à une main de poussée utilisée pour déplacer des bouteilles venant d'être fabriquées.

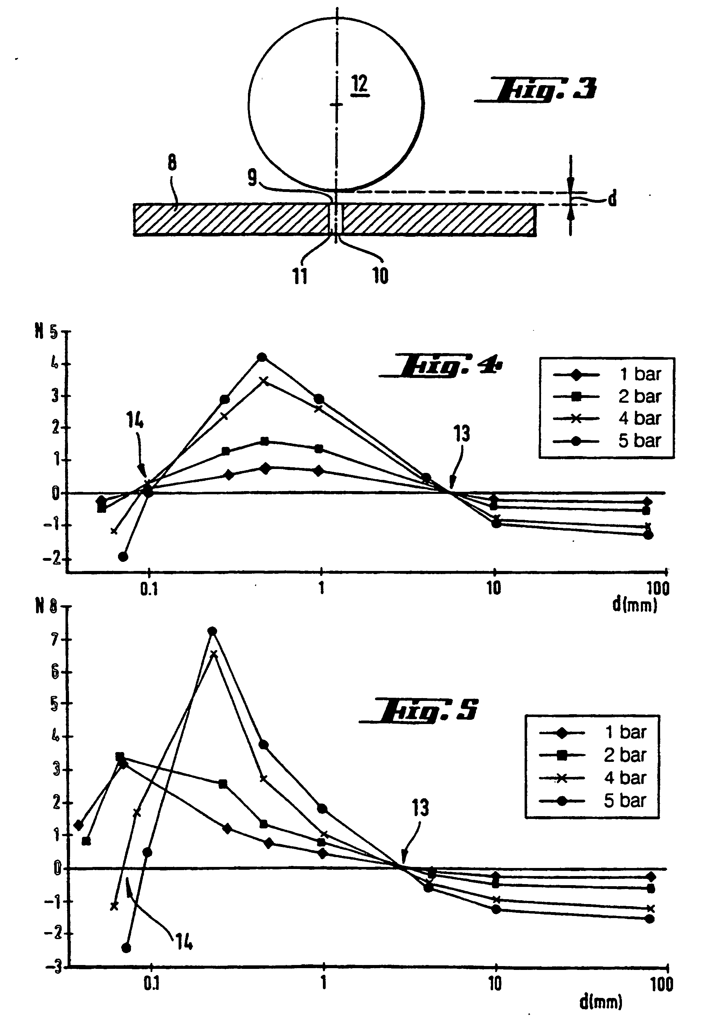

Sur la figure 3, est représentée une vue de dessus d'un schéma d'une partie d'une main de poussée. La paroi 8 de la main de poussée comporte un orifice 9 par lequel est émis un gaz sous pression. L'orifice 9 peut être l'extrémité d'un simple trou ou bien d'une fente. L'autre extrémité 10 du conduit 11 est raccordée à une source, non représentée, de gaz sous pression. Des essais ont été réalisés avec une bouteille en verre 12 d'un diamètre de 80 millimètres se présentant face à l'orifice 9. Ces essais ont été réalisés avec des pressions comprises entre 1 et 5 bars, d'une part lorsque le conduit 11 est un trou présentant un diamètre de 2 millimètres et d'autre part, lorsque le conduit 11 est une fente de largeur 0,25 millimètre et de hauteur 20 millimètres, la fente étant parallèle à l'axe vertical de la bouteille. Les résultats de ces essais sont illustrés par les courbes représentées sur les figures 4 et 5. Ces courbes représentent la force qui s'exerce sur la bouteille 12, exprimée en Newton, en fonction de la distance « d » séparant la bouteille 12 de l'orifice 9. Les points de ces courbes possédant une ordonnée positive correspondent à des forces d'aspiration et les points possédant une ordonnée négative correspondent à des forces de repoussement.

Sur les courbes de la figure 4, il apparaît que tant que la distance est suffisamment importante, la bouteille 12 subit une force de repoussement et est donc éloignée de la paroi 8 de la main de poussée. A partir d'une certaine distance « d », correspondant au point 13, et en dessous de cette valeur, la bouteille 12 subit une force d'aspiration qui l'attire vers la paroi 8. Cette distance qui correspond à un état d'équilibre instable est dans le cas de cet essai légèrement inférieure à 10 millimètres et peut varier en fonction de la pression. Lorsque cette distance arrive au point 14 correspondant à une valeur d'environ 0,1 millimètre, valeur variable en fonction de la pression, la bouteille 12 subit de nouveau une force de repoussement qui interdit alors tout contact entre la paroi 8 et la bouteille 12. Cette figure 4 montre que la main de poussée va pouvoir entraîner le déplacement d'une bouteille 12 sans risque de détériorer celle-ci car il ne se produit pas de contact entre la paroi 8 et la bouteille 12. En effet, dès que la bouteille sort du moule, une main de poussée s'avance vers ladite bouteille. Dès que le point d'équilibre instable 13 est dépassé, la bouteille 12 subit une force d'aspiration qui amène celle-ci au plus près de la paroi 8. Au fur et à mesure du déplacement de la main de poussée, la bouteille se retrouve donc en position d'équilibre stable avec quasiment pas de contact avec la paroi 8 ; il peut tout de même apparaître quelques contacts entre la paroi 8 et la bouteille 12 mais uniquement de nature ponctuelle, par exemple si la bouteille bascule légèrement lors de son déplacement. La bouteille 12 est ainsi maintenue en place de façon quasi stable à proximité de la paroi 8 dans un des logements, de la main de poussée, prévus à cet effet. Il est encore possible d'améliorer le calage de la bouteille lors de son déplacement en prévoyant un second orifice, non représenté sur les figures, par lequel un gaz est également soufflé sous pression, ledit second orifice étant situé sur une autre paroi de la main de poussée perpendiculaire à la paroi 8. La bouteille 12 peut alors être calée dans l'angle formé par les deux parois sans avoir de contact avec lesdites parois de la main de poussée, les deux orifices agissant simultanément sur la bouteille 12.

Les courbes de la figure 5 illustrent le même phénomène lorsque le conduit 11 est une fente présentant une largeur de 0,25 millimètre et une hauteur de 20 mm.

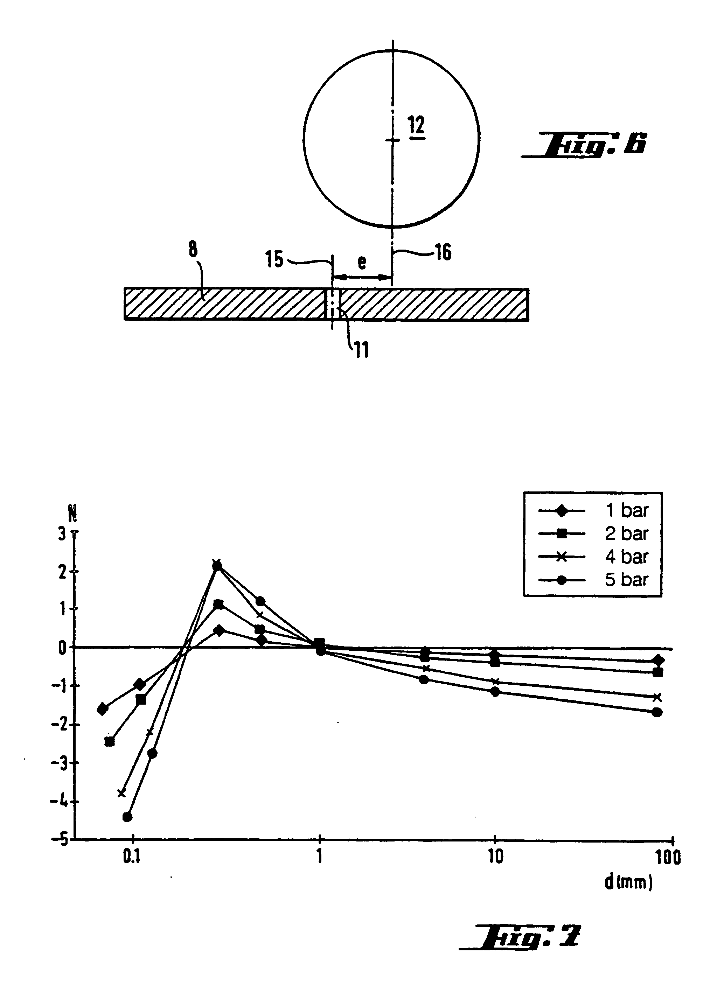

Dans le cas de la figure 3 et donc des figures 4 et 5, il a été considéré que la bouteille 12 se présentait dans l'axe de l'orifice 9. Or il est bien évident que lorsque les bouteilles sont libérées des moules, celles-ci peuvent avoir des positions qui varient quelque peu, ne serait-ce qu'à cause des vibrations dues à ce type d'installation. La figure 6 illustre le cas d'une bouteille 12 se présentant face à l'orifice 9 avec un léger décalage. Ce décalage est représenté sur la figure 6 par la distance « e » qui sépare l'axe 15 du conduit 11 de l'axe 16 de la bouteille 12. Des essais ont également été réalisés selon cette configuration et sont présentés sur la figure 7 dans le cas d'une fente où les différentes courbes correspondent à des pressions différentes ; la distance « e » est d'environ 10 millimètres. Les différentes courbes montrent que malgré le décalage « e », le même phénomène se produit et permet donc de maintenir la bouteille 12 calée près de la paroi 8 sans contact avec celle-ci pouvant conduire à une dégradation de la bouteille 12.

Les différents résultats présentés sur les figures 4, 5 et 7 montrent que cette première variante de l'invention, illustrée sur les figures 3 et 6, conduit bien au résultat recherché : maintenir la bouteille 12 calée près de la paroi 8 en limitant les contacts avec celle-ci. Par contre, dans tous les cas, il existe une zone des courbes, correspondant à des distances supérieures au point d'équilibre instable, où les bouteilles subissent des forces de repoussement. Il paraît donc délicat de pouvoir approcher une bouteille 12 sans que ces forces ne risquent de la déséquilibrer, pouvant ainsi entraîner sa chute voire sa casse. Une solution consiste à ne débuter le soufflage de gaz que lorsque la distance « d » séparant la bouteille 12 de la paroi 8 correspond à des forces d'aspiration qui s'exercent sur ladite bouteille 12. Il a été dit précédemment que si une telle solution est envisageable, elle est par contre compliquée à mettre en oeuvre et d'un coût élevé.

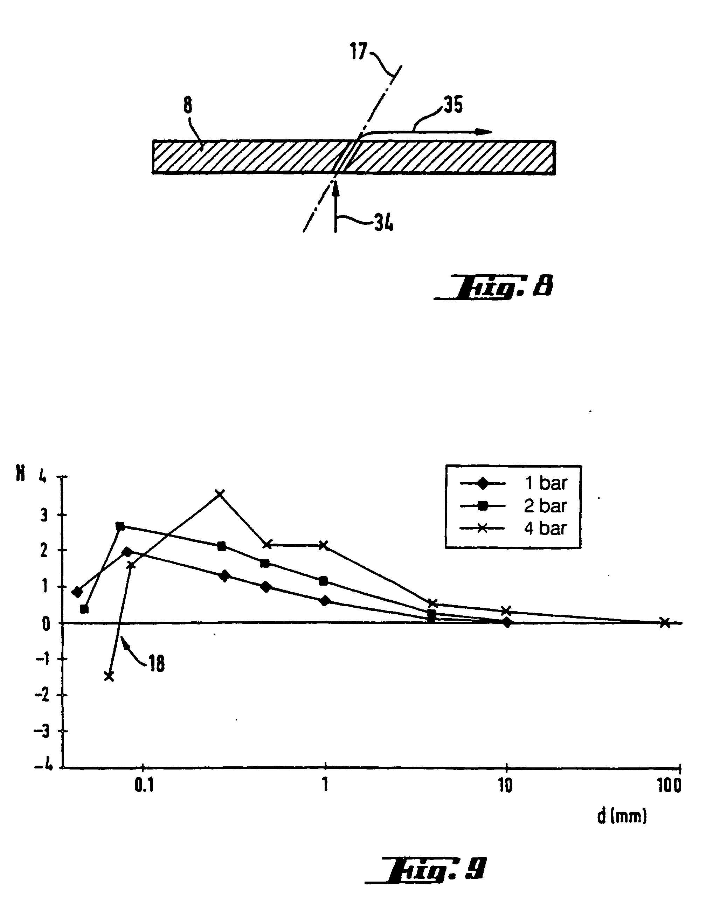

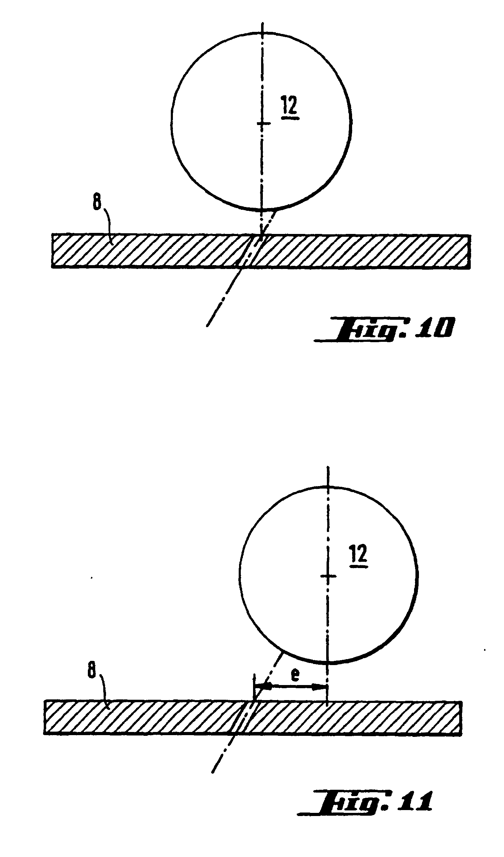

Une autre variante de l'invention est illustrée sur la figure 8. Selon cette variante, la paroi 8 est traversée par une fente au travers de laquelle circule un gaz sous pression selon la direction indiquée par les flèches 34, 35, ladite fente faisant un angle avec la perpendiculaire à la surface de la paroi 8. Une telle configuration, avec un angle doit être supérieure à une valeur définie en fonction des dimensions de la fente et de la pression du gaz, crée un effet Coanda sur la paroi 8 ; c'est-à-dire que le flux de gaz issu de la fente longe la surface de la paroi 8 au lieu de sortir suivant l'axe 17 de la fente comme on s'y attendrait. Un tel dispositif permet donc, lorsqu'une main de poussée avance en direction d'une bouteille, de ne pas repousser celle-ci car le flux de gaz n'est pas orienté en direction de la bouteille 12. Cet effet est illustré sur la figure 9 où sont représentées des courbes correspondant à différentes pressions de gaz, celui-ci traversant une fente de largeur 0,25 millimètre et de hauteur 20 millimètres et faisant un angle de 45° avec la perpendiculaire à la surface de la paroi 8. Dans ces essais, la bouteille avait 80 mm de diamètre et était située juste en face de l'orifice de sortie de l'air de la fente, comme indiqué sur la figure 10. Ces courbes montrent que la bouteille 12 est continuellement aspirée vers la paroi 8 jusqu'au point d'équilibre stable 18 à partir duquel la bouteille 12 est repoussée. Dans la zone d'aspiration, lorsque la distance est grande, l'aspiration est quasi négligeable mais les courbes montrent qu'elle devient considérable lorsque la distance « d » devient plus petite ; en effet, les valeurs d'aspiration de ces courbes sont comparables à celles des courbes des figures 4, 5 et 7. Lorsque la main de poussée est approchée de la bouteille 12, celle-ci subit donc des forces d'aspiration qui permettent de la caler à proximité de la paroi 8 en évitant les contacts avec ladite paroi 8.

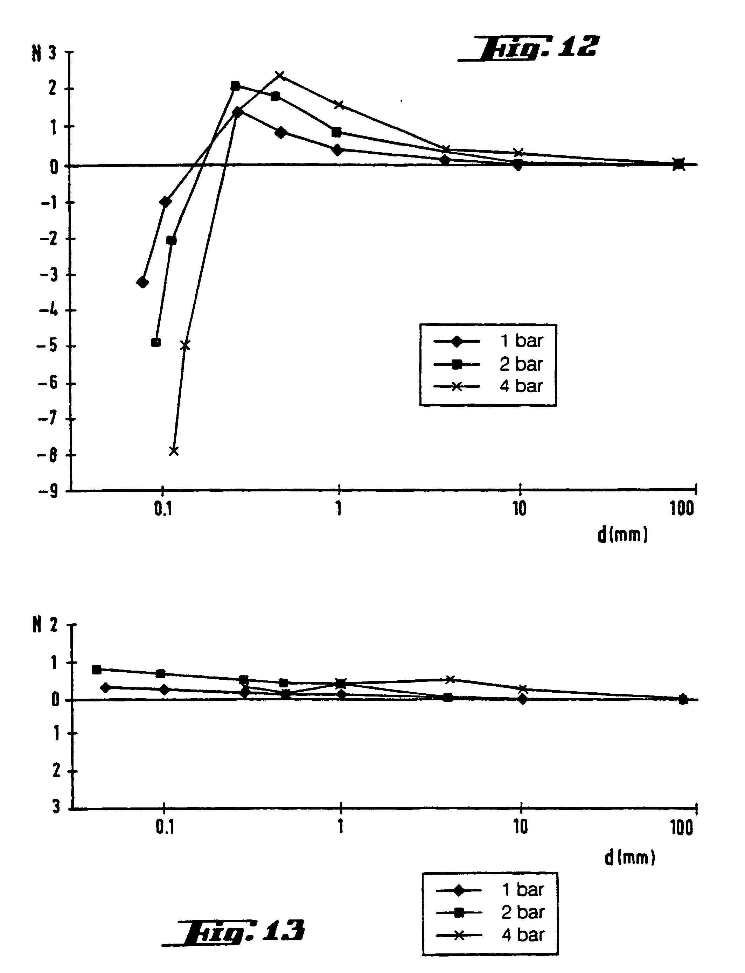

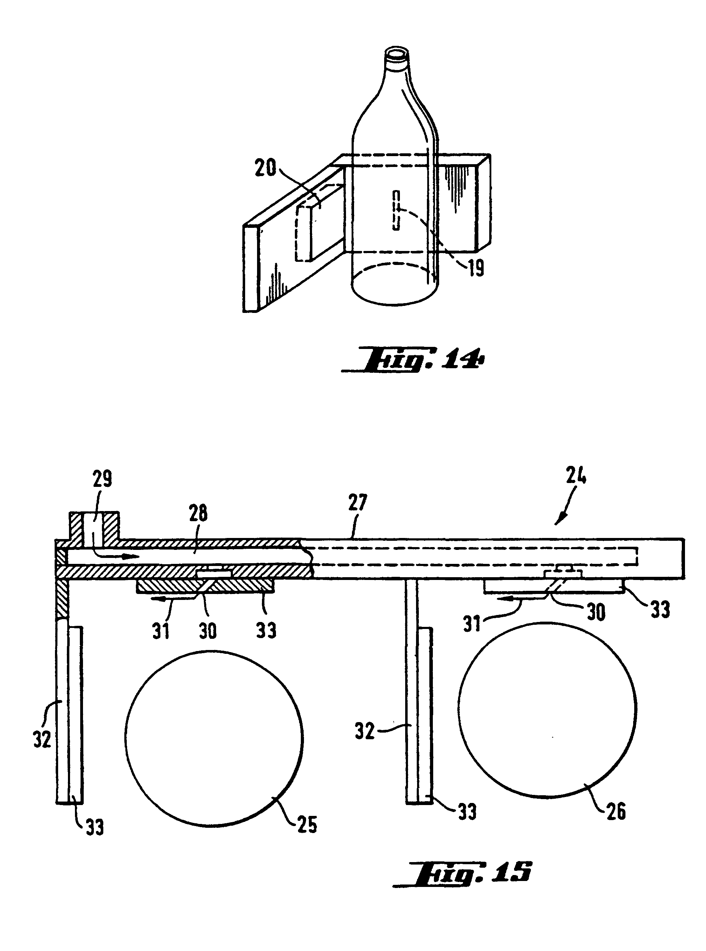

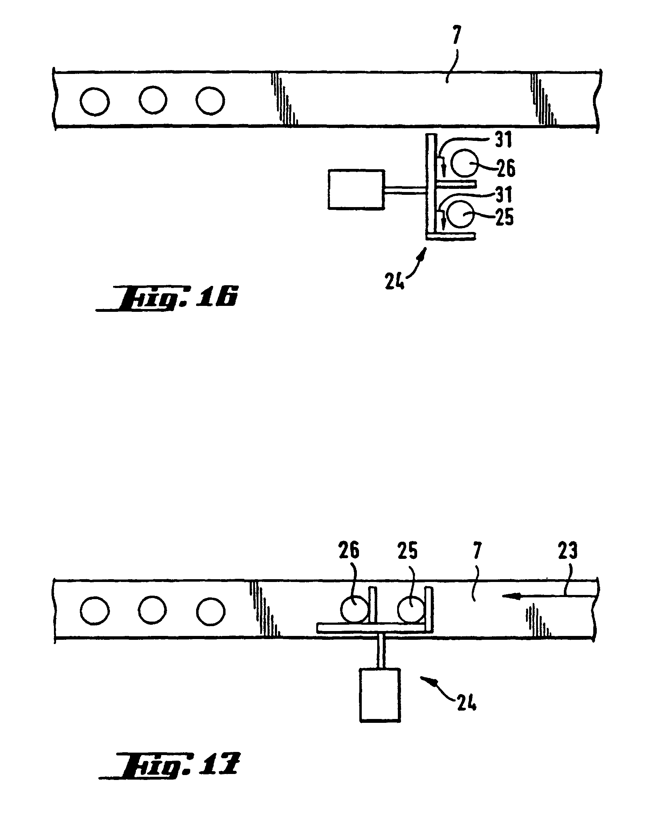

La figure 11 décrit le même dispositif que celui de la figure 10 mais la bouteille 12 présente un décalage « e » par rapport à l'orifice de la fente. Lors des mesures, ce décalage « e » était d'environ 10 millimètres. Les résultats des essais, effectués avec plusieurs pressions de gaz, sont présentés sur la figure 12 qui montre que, même lorsqu'une bouteille ne se présente pas directement en face de l'orifice, cette variante selon l'invention reste efficace et permet de caler la bouteille 12 dans le logement prévu à cet effet de la main de poussée en limitant les contacts avec la paroi 8 de la main de poussée, lors du déplacement de l'ensemble main de poussée - bouteille 12.

Sur la figure 11, la bouteille 12 est décalée par rapport à l'orifice mais selon cette configuration la bouteille 12 est face au flux de gaz émis par la fente, qui du fait de l'effet Coanda, longe la paroi 8. Il est toutefois possible que la bouteille 12 soit décalée par rapport à l'orifice dans l'autre sens. Des essais ont été réalisés, avec différentes pressions de gaz, selon cette configuration non représentée sur les figures. Les résultats apparaissent sur la figure 13 ; la bouteille 12 subit des forces d'aspiration qui l'entraîne vers la paroi mais il n'apparaît pas de force de repoussement. Pour éviter les contacts qui pourraient intervenir, l'invention prévoit une seconde fente placée sur une paroi perpendiculaire à la paroi 8 de façon à venir caler la bouteille 12 dans l'angle formé par les deux parois. La bouteille 12 est ainsi ramenée dans une position semblable à celle de la figure 10 du fait de l'aspiration due à la seconde fente.

L'invention prévoit par ailleurs des ouvertures dans au moins l'une des parois de la main de poussée pour permettre l'évacuation du flux de gaz et éviter tous risques de turbulence. Une telle réalisation est illustrée sur la figure 14. Sur cette figure 14, sont représentées deux parois perpendiculaires formant une partie de la main de poussée. La fente 19, souffle de l'air vers le coin formé par les deux parois, l'air étant évacué par l'ouverture 20 prévue sur la seconde paroi. Lorsqu'une bouteille est présente, celle-ci est aspirée et bloquée dans le coin de la main de poussée. Par ailleurs, l'air étant évacué par l'ouverture 20, il ne perturbe pas le positionnement de ladite bouteille. De même, lorsqu'il existe deux fentes placées sur deux parois perpendiculaires, celles-ci seront de préférence positionnées à des hauteurs différentes pour ne pas interférer.

Sur la figure 15, une main de poussée 24 selon l'invention est illustrée. Cette main de poussée 24 comporte deux logements dans lesquels peuvent venir deux bouteilles 25, 26. Dans la paroi principale 27, c'est-à-dire celle faisant face aux bouteilles, est schématisée la conduite 28 dans laquelle l'air comprimé est amené depuis l'entrée 29 jusqu'aux fentes 30. A la sortie de ces fentes se produit l'effet Coanda symbolisé par les flèches 31. Les mains de poussée comportent également des parois ou doigts 32 perpendiculaires à la paroi 27 et formant des logements dans lesquels sont maintenues les bouteilles 25, 26 lors du déplacement de la main de poussée. Pour éviter, tout contact direct avec les parois, sont prévus des matériaux de contact 33 sur chacune des parois dont la fonction est de limiter tout risque de dégradation du verre.

Les figures 16 et 17 montrent les deux positions extrêmes de la main de poussée 24 associée aux bouteilles 25, 26. Les inventeurs ont su mettre en évidence, que s'il fallait éviter au mieux les contacts avec les parois de la main de poussée, il était également très important de lutter contre la force centrifuge due au déplacement de la main de poussée. C'est notamment pour lutter contre cette force centrifuge que les fentes sont placées sur la paroi principale 27 de la main de poussée. S'il a été vu précédemment qu'il était également possible de prévoir des fentes supplémentaires sur les parois ou doigts 32, ces fentes supplémentaires ne pourraient pas être les seules car l'aspiration serait alors insuffisante pour lutter contre la force centrifuge du fait de leurs positions.

L'invention a été décrite plus particulièrement pour une application concemant des mains de poussée. Toutefois, les résultats obtenus qui consistent à caler un article, notamment du fait de forces d'aspiration, en limitant les contacts avec la paroi de l'outil mécanique, sont intéressants pour d'autres applications telles que celles mentionnées précédemment : aligneur de bouteilles sur un convoyeur, goulottes pour convoyer des paraisons. Dans de tels cas, il est possible de prévoir différentes fentes agissant successivement sur les articles qui défilent devant la paroi de l'outil ; par exemple, l'alignement de bouteilles sur un convoyeur peut être réalisé progressivement par l'intervention successive de plusieurs orifices émettant un jet de gaz, tandis que les bouteilles sont véhiculées sur un tapis roulant.

## Revendications

1. Procédé de manutention de bouteilles (5, 12, 25, 26) avec une main de poussée (4, 24), dans lequel cette main de poussée (4, 24) véhicule les bouteilles (5, 12, 25, 26) ou participe au transfert des bouteilles (5, 12, 25, 26), **caractérisé en ce qu'**on souffle au moins un jet de gaz sous pression au travers d'un conduit (11) traversant la main de poussée (4, 24), et **en ce qu'**on maintient les bouteilles (5, 12, 25, 26) en position contre la main de poussée (4, 24) en limitant les contacts avec celle-ci, par l'intermédiaire dudit jet de gaz.

2. Procédé selon la revendication 1, **caractérisé en ce que** les bouteilles (5, 12, 25, 26) sont en verre et sont à une température élevée lors de leur manutention.

3. Procédé selon l'une des revendications 1 ou 2, **caractérisé en ce qu'**on débute le soufflage de gaz lorsque la bouteille (5, 12, 25, 26) est à une distance déterminée de la main de poussée.

4. Procédé selon l'une des revendications 1 ou 2, **caractérisé en ce qu'**on souffle le jet de gaz au travers d'un conduit (11) disposé relativement à la paroi (8) de la main de poussée (4, 24) sur laquelle il débouche de façon à créer un effet Coanda sur la paroi de la main de poussée.

5. Procédé selon la revendication 4, **caractérisé en ce que** le gaz s'écoule selon une direction semblable à la trajectoire relative suivie par la bouteille (5, 12, 25, 26) vis-à-vis de la main de poussée (4, 24).

6. Procédé selon l'une des revendications 1 à 5, **caractérisé en ce qu'**on souffle au moins deux jets de gaz agissant simultanément ou successivement sur la même bouteille (5, 12) ou sur des bouteilles (25, 26) différentes.

7. Procédé selon l'une des revendications 1 à 6, **caractérisé en ce que** la main de poussée (4, 24) comporte une paroi principale (27) et des doigts (32) perpendiculaires et **en ce que** souffle au moins un jet de gaz sous pression au travers d'un conduit (28) traversant la paroi principale (27).

8. Dispositif pour la manutention de bouteilles (5, 12, 25, 26) avec une main de poussée (4, 24) pour véhiculer ces bouteilles (5, 12, 25, 26) ou participer à leur transfert, **caractérisé en ce qu'**au moins une paroi (8) de la main de poussée (4, 24) est percée d'au moins un conduit (11) relié à une source de gaz sous pression **et en ce que** l'orifice (9) dudit conduit (11) est placé tel que la distance (d) le séparant des bouteilles (5, 12, 25, 26) diminue pendant au moins une première phase de la manutention.

9. Dispositif selon la revendication 8, **caractérisé en ce que** la direction (17) du conduit (11) forme un angle avec la surface de la paroi (8) qu'il traverse pour former un effet Coanda avec le jet de gaz sortant.

10. Dispositif selon l'une des revendications 8 ou 9, **caractérisé en ce que** l'orifice du conduit (11) est une fente (19, 30).

11. Dispositif selon l'une des revendications 8 ou 9, **caractérisé en ce que** l'orifice (9) se compose d'un ensemble de trous.

12. Dispositif selon la revendication 8, **caractérisé en ce que** la main de poussée (4, 24) comporte une paroi principale (27) et des doigts (32) perpendiculaires.

13. Application du procédé selon l'une des revendications 1 à 7 pour l'alignement de bouteilles (5, 12, 25, 26) sur un convoyeur (7).

## Claims

1. Method of handling bottles (5, 12, 25, 26) with a pusher (4, 24), in which this pusher (4, 24) conveys the bottles (5, 12, 25, 26) or participates in the transfer of the bottles (5, 12, 25, 26), **characterised in that** at least one pressurised gas jet is blown through a conduit (11) passing through the pusher (4, 24) and **in that** the bottles (5, 12, 25, 26) are maintained in position against the pusher (4, 24) whilst limiting the contacts therewith, by means of the said gas jet.

2. Method according to Claim 1, **characterised in that** the bottles (5, 12, 25, 26) are made from glass and are at a high temperature during their handling.

3. Method according to one of Claims 1 or 2, **characterised in that** the gas blowing is commenced when the bottle (5, 12, 25, 26) is at a given distance from the pusher.

4. Method according to one of Claims 1 or 2, **characterised in that** the gas jet is blown through a conduit (11) disposed relative to the wall (8) of the pusher (4, 24) on which it opens out so as to create a Coanda effect on the wall of the pusher.

5. Method according to Claim 4, **characterised in that** the gas flows in a direction similar to the relative path followed by the bottle (5, 12, 25, 26) vis-à-vis the pusher (4, 24).

6. Method according to one of Claims 1 to 5, **characterised in that** at least two gas jets acting simultaneously or successively on the same bottle (5, 12) or on different bottles (25, 26) are blown.

7. Method according to one of Claims 1 to 6, **characterised in that** the pusher (4, 24) comprises a main wall (27) and perpendicular fingers (32) and **in that** at least one pressurised gas jet is blown through a conduit (28) passing through the main wall (27).

8. Device for handling bottles (5, 12, 25, 26) with a pusher (4, 24) in order to convey these bottles (5, 12, 25, 26) or participate in their transfer, **characterised in that** at least one wall (8) of the pusher (4, 24) has passing through it at least one conduit (11) connected to a pressurised gas source and **in that** the orifice (9) of the said conduit (11) is placed such that the distance (d) separating it from the bottles (5, 12, 25, 26) decreases during at least a first phase of the handling.

9. Device according to Claim 8, **characterised in that** the direction (17) of the conduit (11) forms an angle with the surface of the wall (8) which it passes through in order to form a Coanda effect with the emerging gas jet.

10. Device according to one of Claims 8 or 9, **characterised in that** the orifice of the conduit (11) is a slot (19, 30).

11. Device according to one of Claims 8 or 9, **characterised in that** the orifice (9) is composed of a set of holes.

12. Device according to Claim 8, **characterised in that** the pusher (4, 24) comprises a main wall (27) and perpendicular fingers (32).

13. Application of the method according to one of Claims 1 to 7 for the alignment of bottles (5, 12, 25, 26) on a conveyer (7).

## Patentansprüche

1. Verfahren zur Handhabung von Flaschen (5, 12, 25, 26) mit einer Übergabehand (4, 24), welche die Flaschen (5, 12, 25, 26) transportiert oder an deren Übergabe beteiligt ist, **dadurch gekennzeichnet, dass** mindestens ein Druckgasstrahl durch eine Leitung (11) geblasen wird, welche durch die Übergabehand (4, 24) hindurchgeht, und dass die Flaschen (5, 12, 25, 26) in Position an der Übergabehand (4, 24) gehalten werden, wobei der Kontakt mit dieser durch Zwischenlegen des Gasstrahls begrenzt wird.

2. Verfahren nach Anspruch 1, **dadurch gekennzeichnet, dass** die Flaschen (5, 12, 25, 26) aus Glas bestehen und ihre Temperatur bei der Handhabung hoch ist.

3. Verfahren nach Anspruch 1 oder 2, **dadurch gekennzeichnet, dass** mit dem Einblasen des Gases begonnen wird, wenn sich die Flasche (5, 12, 25, 26) in einer bestimmten Entfernung von der Übergabehand befindet.

4. Verfahren nach Anspruch 1 oder 2, **dadurch gekennzeichnet, dass** der Gasstrahl durch eine Leitung (11) geblasen wird, die derart in Bezug auf die Wand (8) der Übergabehand (4, 24) angeordnet ist, in welcher sie mündet, dass an der Wand der Übergabehand ein Coanda-Effekt erzeugt wird.

5. Verfahren nach Anspruch 4, **dadurch gekennzeichnet, dass** das Gas in einer ähnlichen Richtung wie der relative Weg strömt, der von der Flasche (5, 12, 25, 26) gegenüber der Übergabehand (4, 24) verfolgt wird.

6. Verfahren nach einem der Ansprüche 1 bis 5, **dadurch gekennzeichnet, dass** mindestens zwei Gasstrahlen eingeblasen werden, die gleichzeitig oder nacheinander auf ein und dieselbe Flasche (5, 12) oder auf mehrere Flaschen (25, 26) einwirken.

7. Verfahren nach einem der Ansprüche 1 bis 6, **dadurch gekennzeichnet, dass** die Übergabehand (4, 24) eine Hauptwand (27) und dazu senkrechte Finger (32) umfasst, **und dass** mindestens ein Druckgasstrahl durch eine Leitung (28) geblasen wird, die durch die Hauptwand (27) hindurchgeht.

8. Vorrichtung zur Handhabung von Flaschen (5, 12, 25, 26) mit einer Übergabehand (4, 24), welche die Flaschen (5, 12, 25, 26) transportiert oder an deren Übergabe beteiligt ist, **dadurch gekennzeichnet, dass** durch wenigstens eine Wand (8) der Übergabehand (4, 24) mindestens eine Leitung (11) hindurchgeht, die an eine Druckgasquelle angeschlossen ist, und dass die Öffnung (9) der Leitung (11) derart angeordnet ist, dass die Entfernung (d), die sie von den Flaschen (5, 12, 25, 26) trennt, wenigstens in der ersten Handhabungsphase abnimmt.

9. Vorrichtung nach Anspruch 8, **dadurch gekennzeichnet, dass** die Richtung (17) der Leitung (11) einen Winkel mit der Fläche der Wand (8), durch welche sie hindurchgeht, bildet, um mit dem austretenden Gasstrahl einen Coanda-Effekt zu erzeugen.

10. Vorrichtung nach Anspruch 8 oder 9, **dadurch gekennzeichnet, dass** die Öffnung der Leitung (11) ein Schlitz (19, 30) ist.

11. Vorrichtung nach Anspruch 8 oder 9, **dadurch gekennzeichnet, dass** sich die Öffnung (9) aus einer Gruppe von Löchern zusammensetzt.

12. Vorrichtung nach Anspruch 8, **dadurch gekennzeichnet, dass** die Übergabehand (4, 24) eine Hauptwand (27) und dazu senkrechte Finger (32) umfasst.

13. Anwendung des Verfahrens nach einem der Ansprüche 1 bis 7 auf die Ausrichtung von Flaschen (5, 12, 25, 26) auf einem Gurtförderer (7).
